# EUROPÄISCHE PATENTSCHRIFT

(11) **EP 0 857 367 B1**
(45) Veröffentlichungstag und Bekanntmachung des Hinweises auf die Patenterteilung: **08.09.1999**
(21) Anmeldenummer: 96945827.2
(22) Anmeldetag: 24.10.1996
(51) Int. Cl.: H02G 5/00

(54) **KONTAKTTRENNVORRICHTUNG EINES ABGANGSKASTENS EINES ENERGIEVERTEILSYSTEMS**
CONTACT-SEPARATING DEVICE FOR A TAP-OFF BOX OF A POWER-DISTRIBUTION SYSTEM
DISPOSITIF DE SEPARATION DE CONTACTS D'UNE BOITE DE DERIVATION D'UN SYSTEME DE DISTRIBUTION D'ENERGIE

(30) Priorität: 28.10.1995 DE 19540334
(43) Veröffentlichungstag der Anmeldung: 12.08.1998
(73) Patentinhaber: Moeller GmbH, 53115 Bonn (DE)
(72) Erfinder: VON HASSELT, Georg, D-54576 Hillesheim (DE); AMMANN, Eckhard, D-53819 Seelscheid (DE); MOELLER, Hans, D-53121 Bonn (DE)
(86) Internationale Anmeldenummer: DE9602019
(87) Internationale Veröffentlichungsnummer: WO9715972

(56) Entgegenhaltungen:
- DE-B- 1 131 769
- DE-U- 9 201 816
- FR-A- 1 247 444
- US-A- 2 861 139
- US-A- 2 888 529
- US-A- 3 335 329

## Beschreibung

Die vorliegende Erfindung betrifft einen Abgangskasten eines Energieverteilsystems entsprechend dem Oberbegriff des Anspruchs 1.

Energieverteilsysteme werden vornehmlich in Werkstätten, Labors, Ausstellungsräumen, Krankenhäusern, Gewächshäusern oder dergleichen eingesetzt, in denen der Stromverbrauch den eines üblichen Haushalts übersteigt. Deshalb sind die hier in Rede stehenden Energieverteilsysteme für einen Strom von 40 A und mehr ausgelegt.

Innerhalb der Energieverteilsysteme wird der Strom in sogenannten in Schienenkanälen angeordneten Stromschienen transportiert. Bei den bekannten Energieverteilsystemen sind in jedem Schienenkanal vier Stromschienen vorgesehen, wobei jede Stromschiene die Energie in einer anderen Phase transportiert, sodaß ein Schienenkanal einen L1, L2, L3 und einen N-Leiter aufweist.

Zur Stromentnahme sind an den Schienenkanälen in regelmäßigen Abständen Abgangsstellen vorgesehen, an denen sogenannte Abgangskästen befestigt werden können. Diese Abgangskästen weisen je nach Einsatzzweck Schalt- oder Schutzgeräte, Schmelzsicherungen, Magnetsicherungen oder handelsübliche Schuko-Steckdosen auf. Diese Abgangskästt beabstandet und isoliert von der Kontaktklemme eine weiter Klemme vorgesehen, die über eine Schmelzsicherung mit der Kabelaufnahme in Verbindung steht.

Solange der Deckel des Abgangskastens göffnet ist, stehen weder die Sicherung noch die Kabelaufnahme unter Strom, da der Stromfluß zwischen der Kontaktklemme und der Klemme unterbrochen ist. An der Innenseite des Deckels ist für jede Phase ein Kontaktstück mit zwei senkrecht vom Deckel abstehenden Kontaktenfingern angeordnet. Nach dem Schließen des Deckels greifen diese Kontaktfinger einerseits in Kontaktklemme und anderseits in die Klemme ein, sodaß die Kabelaufnahme über die Schmelzsicherung mit der Stromschiene elektrisch verbunden ist.

Nach dem Öffnen des Deckels ist die Stromleitung zwar unterbrochen, da das Kontaktstück aus der Klemme beziehungsweise der Kontaktklemme herausgezogen ist, jedoch steht die offen zugängliche Kontaktklemme nach wie vor unter Strom. Sollte der an dem Abgangskasten arbeitende Mechaniker_ischen der Kabelaufnahme und den Stromschienen im Schienenkanal, damit am Abgangskasten Wartungs-, Reparatur- oder Montagearbeiten durchgeführt werden können.

Der aus diesen beiden Druckschriften bekannte Abgangskasten weist Stromschienenklemmen auf, die auf die Stromschienen im Schienenkanal aufgeklemmt werden. Diese Stromschienenklemmen sind mit einer Kontaktklemme verbunden, die an der Oberseite des Basiselementes offen zugänglich sind. Im Inneren des Basiselementes des Abgangskastens ist beabstandet und isoliert von der Kontaktklemme eine weiter Klemme vorgesehen, die über eine Schmelzsicherung mit der Kabelaufnahme in Verbindung steht.

Solange der Deckel des Abgangskastens geöffnet ist, stehen weder die Sicherung noch die Kabelaufnahme unter Strom, da der Stromfluß zwischen der Kontaktklemme und der Klemme unterbrochen ist. An der Innenseite des Deckels ist für jede Phase ein Kontaktstück mit zwei senkrecht vom Deckel abstehenden Kontaktenfingern angeordnet. Nach dem Schließen des Deckels greifen diese Kontaktfinger einerseits in Kontaktklemme und anderseits in die Klemme ein, sodaß die Kabelaufnahme über die Schmelzsicherung mit der Stromschiene elektrisch verbunden ist.

Nach dem Öffnen des Deckels ist die Stromleitung zwar unterbrochen, da das Kontaktstück aus der Klemme beziehungsweise der Kontaktklemme herausgezogen ist, jedoch steht die offen zugängliche Kontaktklemme nach wie vor unter Strom. Sollte der an dem Abgangskasten arbeitende Mechaniker aus Versehen an diese offen zugängliche Kontaktklemme geraten, so kann er sich dabei empfindlich verletzen. Außerdem ist es möglich, daß wenn versehentlich ein metallisch leitendes Werkzeug, ein Draht oder dergleichen sehr unglücklich in zwei Kontaktklemmen fällt, ein Kurzschluß im Energieverteilsystem entsteht.

Zwar sind diese Kontaktklemmen entsprechen den geltenden Vorschriften fingersicher ausgeführt, jedoch kann jede noch so gute Absicherung umgangen werden.

Zur Überwindung dieses Mangels ist in der DE-AS 11 31 769 vorgeschlagen worden, einen Abgangskasten zu schaffen, bei dem mit dem Öffnen des Deckels die gesammte Kontakttrennvorrichtung von den Stromschienen abgezogen wird. Hierdurch wird zwar erreicht, daß keines der im Abgangskasten befindlichen Geräte oder Kabel unter Strom steht, nachdem der Deckel geöffnet worden ist, allerdings ist die hier verwendete Konstruktion so kompliziert und aufwendig, daß sie nicht wirtschaftlich herstellbar ist.

Aus der US-A-2888529 ist ein Abgangskasten bekannt. Aus dieser Schrift ist zu entnehmen, daß eine Kontakttrennvorrichtung eine an einem Basiselement (20) befestigte Abgriffeinheit (16) und eine am Deckel (12) befestigte Verriegelungseinheit (24,26,29-31) aufweist, daß die zwischen zwei Führungsplatten (31) verschieblich gelagerte Abgriffeinheit (16) Kontaktfinger (21) umfaßt, wobei die Kontaktfinger (21) bei geschlossenem Deckel (12) entsprechende Stromschienen (22) greifen und bei geöffnetem Deckel (12) von den Stromschienen (40) beabstandet sind. Diese Kontaktrennvorrichtung ist wegen des relartiv hohen Konstruktiven Aufwandes nur für relativ große Abgangskästen aus Metall geignet.

Davon ausgehend liegt der vorliegenden Erfindung die Aufgabe zugrunde, einen Abgangskasten eines Energieverteilsystems zu schaffen, bei dem mit Öffnen des Deckels die Stromschienenklemmen von den Stromschienen abgezogen werden und der kostengünstig herzustellen ist.

Der erfindungsgemäße Abgangskasten eines Energieverteilsystems hat den Vorteil, daß er aus wenigen Einzelteilen besteht und dennoch gewährleistet ist, daß kein einziges Bauteil des Abgangskastens unter Strom steht, wenn der Deckel geöffnet ist.

Die Lösung der vorgenannten Aufgabe gelingt durch die Lehre des Anspruchs 1.

In einer besonders bevorzugten Ausführungsform ist die Eingriffgabel durch eine Feder um 10° bis 45°, vorzugsweise 30°, gegenüber der Verriegelungseinheit geneigt. Dabei wird die Eingriffgabel durch eine Feder in dieser Position vorgespannt.

Der Deckel des Abgangskastens ist an seiner Schmalseite drehbeweglich am Basiselement befestigt. Hierdurch vollzieht die dem Scharnier gegenüberliegende Seite des Deckels, an der das Verriegelungselement angebracht ist, eine Kreisbahn. Die abstehend vom Verriegelungselement an diesem angebrachte Eingriffgabel ist deshalb geneigt angebracht, damit die ebenfalls eine Kreisbahn vollziehende Eingriffgabel genau den Trennschieber trifft, wenn der Deckel geschlossen wird.

In einer anderen, bevorzugten Ausführungsform weist die Abgriffeinheit wenigstens ein beweglich gelagertes Sicherungselement auf, welches den Trennschieber in seiner von den Stromschienen beabstandeten Position sichert. Hierdurch wird gewährleistet, daß der Trennschieber mit seinen Stomschienenklemmen bei geöffneten Deckel nicht wieder auf die Stromschienen aufgeschoben werden kann.

In einer weiteren besonders bevorzugten Ausführungsform ist am Trennschieber mindestens ein Sicherungssteg vorgesehen, der bei geschlossenem Deckel in ein Halteblech der Halterung eingreift. Mit dieser Halterung ist das Basiselement und somit auch der Abgangskasten am Schienenkanal des Energieverteilsystems befestigt. Um zu verhindern, daß der gesamte Abgangskasten vom Schienenkanal abgezogen wird, solange die Stromschienenklemmen mit den Stromschienen elektrisch verbunden sind, wird das Halteblech der Halterung durch den Sicherungssteg gesichert, wenn der Deckel geschlossen ist. In diesem Zustand ist es ohne Zerstörung des Abgangskastens nicht möglich, diesen vom Schienenkanal abzuziehen.

Beim Schließen des Deckels des erfindungsgemäßen Abgangskastens umgreift die Eingriffgabel den am Trennschieber angeformten Zapfen. Beim weiteren Verschwenken des Deckels verschiebt die Eingriffgabel die Sicherungselemente, sodaß der Trennschieber freigegeben wird. Danach wird der Trennschieber durch das Schließen derart verschoben, daß die Stromschienenklemmen auf die Stromschienen aufgeschoben werden und der elektrische Kontakt hergestellt ist.

Gleichzeitig werden die am Trennschieber angebrachten Sicherungsstege in ein Halteblech der Halterung eingeführt, sodaß diese bei verschlossenem Deckel gesichert ist. Hierdurch kann der am Schienenkanal befestigte Abgangskasten nicht abmontiert werden, solange der Deckel verschlossen ist.

Zum Unterbrechen der Stromverbindung durch Öffnen des Deckels kommt die Eingriffgabel am Zapfen zum Anliegen und mit weiterem Öffnen des Deckels zieht die Eingriffgabel den Trennschieber von den Stromschienen weg, bis die Stromschienenklemmen von den Stromschienen abgezogen sind.

Bei noch weiterem Öffenen des Deckels wird die Eingriffgabel dann vom Zapfen abgezogen und der Abgangskasten kann vollständig geöffnet werden.

Sobald die Eingriffgabel nicht mehr mit den Sicherungselementen in Berührung steht, werden diese durch eine Feder in ihre Ausgangslage zurückgeführt und untergreifen und sichern den Trennschieber, der sich inzwischen in einer Position befindet, in der Stromschienenklemmen von den Stromschienen beabstandet sind.

Beim erfindungsgemäßen Abgangskasten wird also mit wenigen Bauteilen eine zuverlässig arbeitende Kontakttrennvorrichtung geschaffen, bei der mit Öffnen des Deckels die am Trennschieber angebrachten Stromschienenklemmen von den Stromschienen abgezogen werden, so daß kein einziges Bauteil des geöffneten Abgangskastens unter Stom steht. Folglich erfüllt der erfindungsgemäße Abgangskasten die geforderten Sicherheitsbestimmungen überdeutlich und er kann aufgrund der kostengünstig herzustellenden Bauteile und aufgrund der geringen Anzahl der zu verwendenden Bauteile wirtschaftlich gefertigt werden.

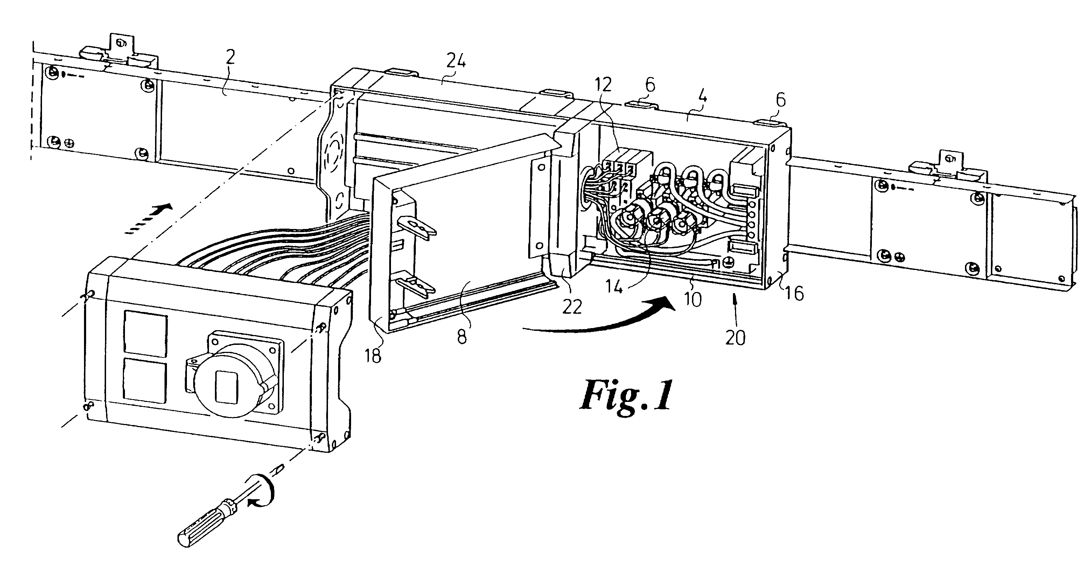

Weiter Vorteile der erfindungsgemäßen Vorrichtung und des erfindungsgemäßen Verfahrens ergeben sich aus der Beschreibung der Ausführungsformen und der beigefügten Zeichnung. Ebenso können die vorstehend genannten und die noch weiter aufgeführten Merkmale erfindungsgemäß jeweils einzeln oder in beliebigen Kombinationen miteinander verwirklicht werden. Die erwähnten Ausführungsformen sind nicht als abschließende Aufzählung zu verstehen, sondern haben vielmehr beispielhaften Charakter. Eine Ausführungsform der Erfindung ist in den Figuren 1 - 6a dargestellt und wird im folgenden näher erläutert.
- Figur 1: zeigt eine perspektivische Ansicht eines an einem Schienenkanal befestigten erfindungsgemäßen Abgangs kastens;
- Figur 2: zeigt den Abgangskasten gemäß Figur 1 in einer perspektivischen Explosionsdarstellung;
- Figur 3: zeigt eine Frontansicht einer Kontaktrennvorichtung in geöffnetem Zustand;
- Figur 3a: zeigt eine Seitenansicht der Kontakttrennvorrichtung gemäß Figur 3, geschnitten entlang Linie IIIa - IIIa in Figur 3;
- Figur 4: zeigt die Kontakttrennvorrichtung gemäß Figur 3 in einem teilweise geöffneten Zustand;
- Figur 4a: zeigt eine Seitenansicht der Kontakttrennvorrichtung gemäß Figur 4, geschnitten entlang Linie IVa - IVa in Figur 4;
- Figur 5: zeigt die Kontakttrennvorrichtung gemäß Figur 3 in einem teilweise geschlossenen Zustand;
- Figur 5a: zeigt eine Seitenansicht der Kontakttrennvorrichtung gemäß Figur 5, geschnitten entlang Linie Va - Va in Figur 5;
- Figur 6: zeigt die Kontakttrennvorrichtung gemäß Figur 3 in geschlossem Zustand;
- Figur 6a: zeigt eine Seitenansicht der Kontakttrennvorrichtung gemäß Figur 6, geschnitten entlang Linie Va - Va.

Die einzelnen Figuren der Zeichnung zeigen den erfindungsgemäßen Gegenstand teilweise stark schematisiert und sind nicht maßstäblich zu verstehen. Dabei sind die Gegenstände der einzelnen Figuren stark überproportional vergrößert dargestellt, damit ihr Aufbau besser gezeigt werden kann.

In **Figur 1** ist in perspektivischer Ansicht ein Teil eines Energieverteilsystems dargestellt. Dieses Energieverteilsystem wird im folgenden näher erläutert: In an einer Wand oder einer Decke befestigten Schienenkanäle **2** befinden sich die nach außen gekapselten Stromschienen. An dem Schienenkanal **2** sind in regelmäßigen Abständen Abgangsstellen vorgesehen, an denen Abgangskästen **4** zur Entnahme von Strom aus den Stromschienen angebracht werden können. Der in **Figur 1** dargestellte, mit Hilfe von Halterungen **6** am Schienenkanal **2** befestigte Abgangskasten **4**, ist mit einem geöffnetem Deckel **8** dargestellt. An einem Basiselement **10** des Abgangskastens **4** sind Schalter **12** und Sicherungen **14** befestigt, die in die Stromleitungen integriert sind.

Am Kopfende des Abgangskastens **4** befindet sich eine aus einer Abgriffeinheit **16** und einer Verriegelungseinheit 18 zusammensetzende Kontakttrennvorrichtung **20**.

Durch die Kontakttrennvorrichtung **20** werden die abgehenden Stromleitungen von den Stromschienen abgetrennt, sobald der an einem Endteil **22** des Basiselements **10** drehbar angebrachte Deckel **8** des Abgangskastens **4** geöffnet wird.

An das Endteil **22** schließt sich bündig ein Gerätekasten **24** an, der ebenfalls mittels Halterungen **6** am Schienenkanal **2** befestigt ist. Dieser Gerätekasten **24** kann weitere Geräte wie zum Beispiel Schütze, Schmelzsicherungen, Magnetsicherungen, Schuko-Steckdosen oder Schalter aufnehmen, die zu Steuerung und Absicherung der vom Schienenkanal **2** abgehenden Leitungen benötigt werden.

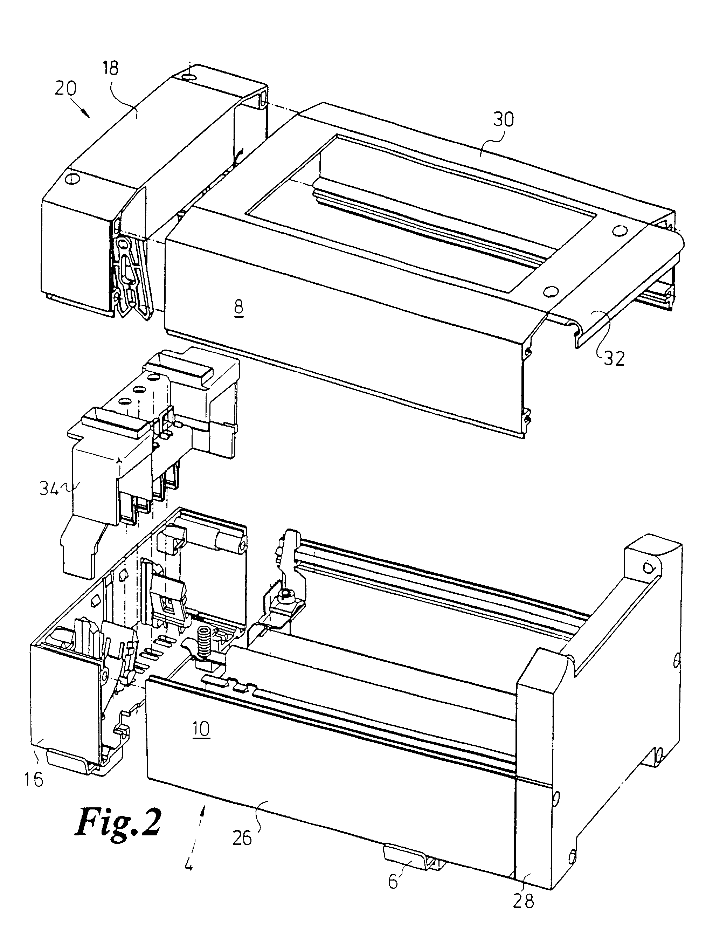

**Figur 2** zeigt den Abgangskasten **4** in einer perspektivischen Explosionsdarstellung. Das Basiselement **10** ist, analog zum Deckel **8**, aus drei Bauteilen zusammengebaut. Das Basiselement **10** besteht aus einem im Strangpressverfahren hergestellten Aluminiumprofil **26**, an das kopfseitig die Abgriffeinheit **16** und endseitig ein Basisendteil **28** angeschraubt ist. Analog dazu besteht der Deckel **8** aus einem ebenfalls im Strangptessverfahren hergstellten Aluminiumprofil **30**, an das kopfseitig die Verriegelungseinheit **18** und endseitig ein Deckelendteil **32** angeschraubt sind. Das Basisendteil **28** und das Deckelendteil **32** sind als Scharnier ausgebildet, um das sich der Deckel **8** schwenken läßt.

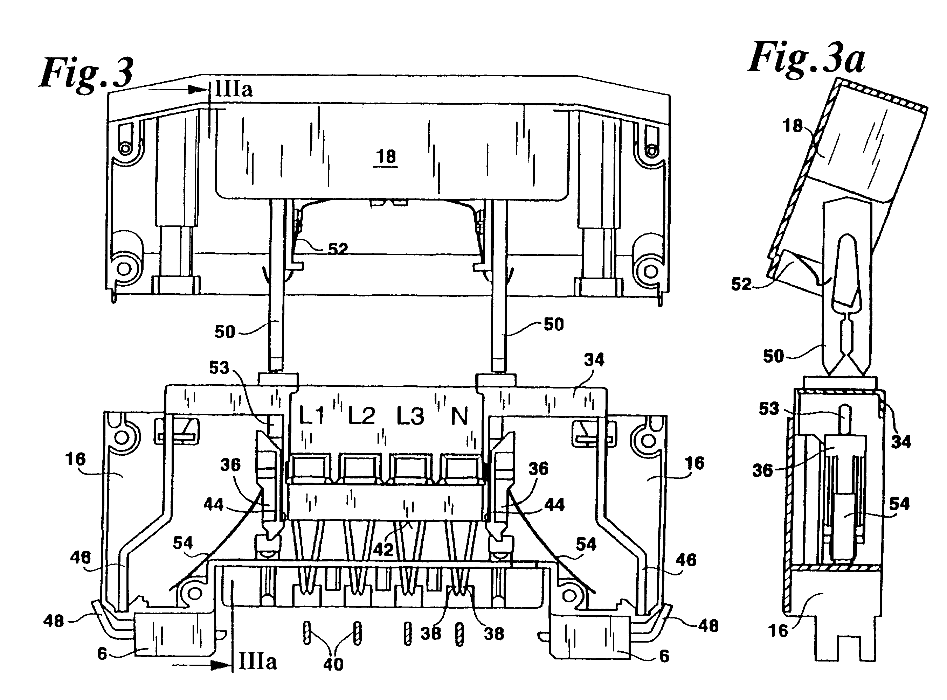

In die Abgriffeinheit **16** ist ein Trennschieber **34** eingesetzt, der, wie die gesamte Kontakttrennvorrichtung **20**, in den **Figuren 3** bis **6a** näher beschrieben werden wird.

In den **Figuren 3** bis **6** ist eine Vorderansicht der Kontakttrennvorrichtung **20** dargestellt, wobei jede Figur einen anderen Verfahrensstand zeigt. Analog zu den **Figuren 3** bis **6** zeigen die **Figuren 3a** bis **6a** eine Seitenansicht der jeweiligen Kontakttrennvorrichtung **20**.

In den **Figuren 3** und **3a** befindet sich die Verriegelungseinheit **18** noch nicht im Eingriff mit der Abgriffeinheit **16**. In diesem Zustand, also wenn der Deckel **8** geöffnet ist, befindet sich der Trennschieber **34** im Eingriff mit den zwei Sicherungselementen **36**, die den Trennschieber **34** und die daran befindlichen Stromschienenklemmen **38** in einer von den Stromschienen **40** beabstandeten Position halten. Dabei werden die Sicherungselemente **36** von Blattfedern **42** derart gegen den Trennschieber **34** gedrückt, daß dieser mit seiner Kante **42** an einem Vorsprung **44** des Sicherungselementes **36** zum Anliegen kommt.

In dieser Position sind auch zwei am Trennschieber **34** angeformte Sicherungsstäbe **46** aus einem Halteblech **48** in der Halterung **6** herausgezogen, so daß das Halteblech **48** entsichert und frei beweglich ist. Das Halteblech **48** der Halterung **6** greift in eine entsprechende Nut am Schienenkanal **2** ein und hält den Abgangskasten **4** somit zuverlässig und stramm am Schienenkanal **2**.

An der Verriegelungseinheit **18** ist eine Eingriffgabel **50** drehbeweglich gelagert, die in den Trennschieber **34** eingreift, sobald der Deckel **8** geschlossen wird, um den Trennschieber **34** in die gewünschte Position zu bringen. Weil sich die am Deckel **8** befestigte Verriegelungseinheit **18** aufgrund der Drehbewegung des Deckels auf einer Kreisbahn bewegt, ist die Eingriffgabel **50** um bis zu 30° schwenkbar. So wird gewährleistet, daß die Eingriffgabel **50** die dafür vorgesehene Öffnung im Trennschieber **34** trifft. Damit die Eingriffgabel **52** nicht wahllos hin und her schwingt, ist sie durch eine Feder **52** vorgespannt.

Beim Eingriff der Eingriffgabel **50** in den Trennschieber **34** stößt diese auf einen am Trennschieber **34** angeformten Zapfen **53.** Beim weiteren zudrücken des Deckels **8** werden die beiden Zinken der Eingriffgabel **50** durch den Zapfen **53** auseinandergedrückt, bis am Zinken befindliche Vorsprünge den Zapfen **53** passiert haben. Nun schnappen die beiden Zinken zurück und umgreifen den Zapfen **53**, so daß die Eingriffgabel **50** den Trennschieber **34** über den Zapfen **53** rauf und runter bewegen kann. Erst wenn der Deckel **8** mit viel Kraft geöffnet wird, werden die Zinken wieder durch den Zapfen **53** auseinandergedrückt und die Eingriffgabel **50** wird vom Zapfen **53** abgezogen.

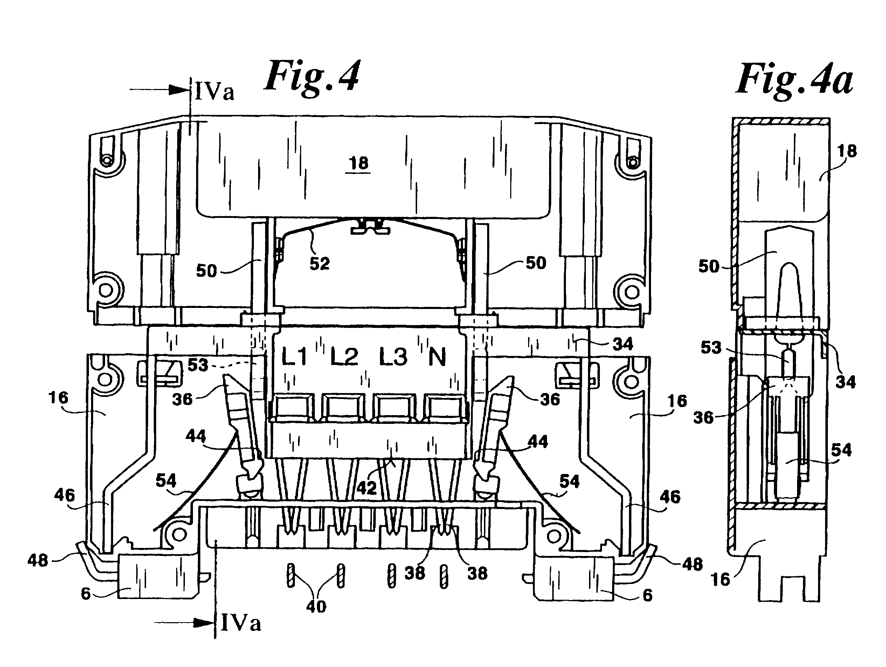

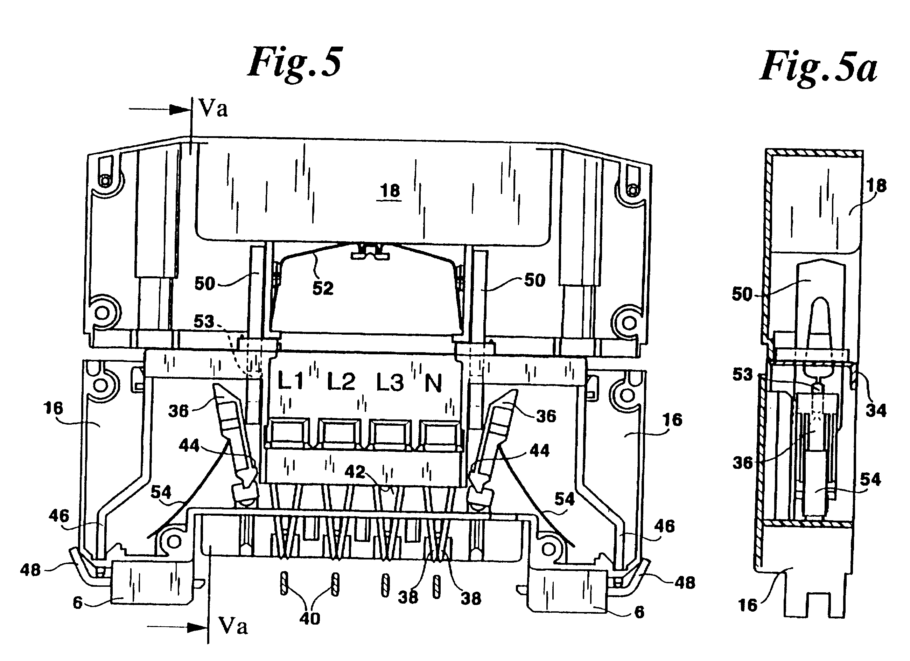

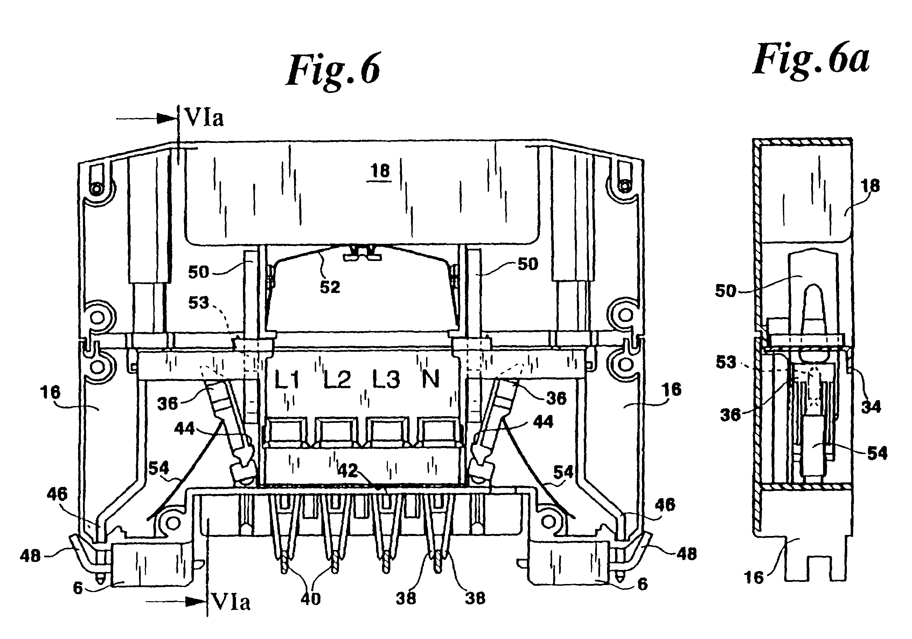

In den **Figuren 4** und **4a** greift die Eingriffgabel **50** bereits in den Trennschieber **34** ein und bewegt die Sicherungselemente **36** entgegen der Kraft der Blattfedern **54** vom Trennschieber **34** weg, sodaß der Vorsprung **44** die Kante **42**, und somit den Trennschieber **34,** freigibt. Wird nun der Deckel noch weiter geschlossen, so wird der Trennschieber **34** wie in den **Figuren 5** und **5a** dargestellt, weiter in Richtung der Stromschienen **40** bewegt, und wenn, wie in den **Figuren 6** und **6a** dargestellt ist, der Deckel 6 komplett geschlossen ist sind die Stromschienenklemmen **38** über die Stromschienen **40** geschoben und stellen eine elektrische Verbindung her. Gleichzeitig greifen nun die Sicherungsstege **46** in entsprechende Öffnungen der Haltbleche **48** ein und fixieren die Haltebleche **48** in dieser Position, so daß der Abgangskasten **4** nicht mit geschlossenen Deckel **8** vom Schienenkanal **2** abgenommen werden kann.

Beim Öffnen des Deckels **6** kommt die Eingriffgabel **50** am Zapfen **53** zur Anlage und zieht den Trennschieber **34** samt Stromschienenklemmen **38** vom Schienenkanal **2** weg, so daß die Stromschienenklemmen **38** von den Stromschienen **40** beabstandet werden und die elektrische Verbindung unterbrochen wird.

Gleichzeitig werden die Sicherungsstege **46** aus dem Halteblech **48** herausgezogen und das Halteblech **48** kann wieder frei bewegt werden.

Sobald die Eingriffgabeln **50** den Trennschieber **34** so weit herausgezogen haben, daß dieser sich in seiner beabstandeten Position befindet, werden die Sicherungselemente **36** durch die Blattfedern **54** in ihre Ausgangsposition gemäß **Figur 3** zurückgedrückt und sichern den Trennschieber **34** gegen Verrutschen.

Durch weiteres Öffen des Deckels **8** wird die Eingriffgabel 50 vom Zapfen **53** weggezogen und der Deckel **8** läßt sich vollständig öffnen. Nun können am Abgangskasten **4** die notwendigen Wartungs-, Reparatur- und/oder Umbauarbeiten vorgenommen werden, denn durch die Beabstandung der Stromschienenklemmen **38** von den Stromschienen **40** steht kein Bauteil des Abgangskasten **4** mehr unter Strom.

## Patentansprüche

1. Abgangskasten eines Energieverteilsystems mit einem an einem Schienenkanal (2) des Energieverteilsystems anbringbaren Basiselement (10), welches durch einen schwenkbar am Basiselement (10) angebrachten Deckel (8) verschließbar ist, und mit einer Kontakttrennvorrichtung (20), welche eine am Basiselement (10) befestigte Abgriffeinheit (16) und eine am Deckel (8) befestigte Verriegelungseinheit (18) aufweist, die die Abgriffeinheit (16) einen verschieblich gelagerten Trennschieber (34) mit Stromschienenklemmen (38) und Kabelaufnahmen umfaßt, wobei die Stromschienenklemmen (38) bei geschlossenem Deckel (8) entsprechende Stromschienen (40) umgreifen und bei geöffnetem Deckel (8) von den Stromschienen (40) beabstandet sind, dadurch gekennzeichnet, daß an der Verriegelungseinheit (18) eine Eingriffgabel (50) angebracht ist, die mit einem am Trennschieber (34) angeformten Zapfen (53) zusammenwirkt, wobei die Eingriffgabel (50) den Zapfen (53) umgreift, um den Trennschieber (34) zu verschieben und daß die Eingriffgabel (50) an der Verriegelungseinheit (18) drehbeweglich gelagert ist.

2. Abgangskasten nach Anspruch 1,
**dadurch gekennzeichnet, daß** daß die Eingriffgabel (50) durch eine Feder (52) zwischen 10° und 45°, vorzugsweise 30°, gegenüber der Verriegelungseinheit (18) geneigt ist.

3. Abgangskasten nach wenigstens einem der Vorhergehenden Ansprüche,
**dadurch gekennzeichnet, daß** die Abgriffeinheit (16) mindestens ein beweglich gelagertes Sicherungselement (36) aufweist, welches den Trennschieber (34) bei geöffnetem Deckel (8) in der Position, in der die Stromschienenklemmen (38) von den Stromschienen (40) beabstandet sind, sichert.

4. Abgangskasten nach Anspruch 3,
**dadurch gekennzeichnet, daß** das Sicherungselement (36) einen Vorsprung (44) aufweist, an dem eine Kante (42) des Trennschiebers (34) zur Anlage kommt.

5. Abgangskasten nach wenigstens einem der Ansprüche 3 und 4,
**dadurch gekennzeichnet, daß** das Sicherungselement (36) federbelastet ist.

6. Abgangskasten nach wenigstens einem der vorhergehenden Ansprüche,
**dadurch gekennzeichnet, daß** am Trennschieber (34) mindestens ein Sicherungssteg (46) vorgesehen ist, der bei geschlossenem Deckel (8) in ein Halteblech (48) einer Halterung (6) eingreift, um diese zu sichern.

7. Verfahren zur Herstellung der Stromverbindung eines Abgangskastens nach wenigstens einem der vorhergehenden Ansprüche mit Stromschienen eines Energieverteilsystems beim Schließen des Deckels,
**dadurch gekennzeichnet, daß** durch das Schließen des Deckels (8) die Eingriffgabel (50) den Zapfen (53) umgreift und anschließend die Sicherungselemente (36) so verschiebt, daß der Trennschieber (34) freigegeben wird, und daß danach der Trennschieber (34) so verschoben wird, daß die Stromschienenklemmen (38) auf die Stromschienen (40) aufgeschoben werden.

8. Verfahren nach Anspruch 7,
**dadurch gekennzeichnet, daß** beim Herstellen der Stromverbindung ein am Trennschieber (34) angebrachter Sicherungssteg (46) in ein Halteblech (48) eingreift, um diese zu sichern.

9. Verfahren zum Unterbrechen der Stromverbindung eines Abgangskastens nach wenigstens einem der vorhergehenden Ansprüche mit Stromschienen eines Energieverteilsystems beim Öffnen des Deckels,
**dadurch gekennzeichnet, daß** durch das Öffnen des Deckels (8) die Eingriffgabel (50) am Zapfen (53) zum Anliegen kommt und den Trennschieber (34) mitnimmt, bis die Stromschienenklemmen (38) von den Stromschienen (40) abgezogen sind, und daß anschließend die Eingriffgabel (50) vom Zapfen (53) abgezogen wird.

10. Verfahren nach Anspruch 9,
**dadurch gekennzeichnet, daß** das die Sicherungselemente (36) den Trennschieber (34) untergreifen und sichern, sobald der Trennschieber (34) die Position erreicht hat, in der die Stromschienenklemmen (38) von den Stromschienen (40) beabstandet sind.

## Claims

1. Distribution box of an energy distribution system with a base element (10) which is attachable to a bus bar duct (2) of the energy distribution system, and which can be closed by a cover (8) swivelling at the base element (10), and including a contact separation device (20) which presents a tapping unit (16) fixed to the base element (10) and a locking unit (18) fixed to the cover (8), with the tapping unit (16) comprising a disconnecting slider (34) supported in a slidable way with bus bar terminals (38) and cable bushings, while the bus bar terminals (38) grasp around corresponding bus bars (40) when the cover is closed (8), and are at a distance of the bus bars (40) when the cover (8) is opened,
**characterised in that** an engagement fork (50) is attached at the locking unit (18), and co-operates with a stud (53) formed integral with the disconnecting slider (34), while the engagement fork (50) engages encompassing the stud (53) in order to displace the disconnecting slider (34), and in that the engagement fork (50) is supported in a turnable way at the locking unit (18).

2. Distribution box as claimed in claim 1,
**characterised in that**
the engagement fork (50) is inclined by means of a spring (52) at an angle between 10° and 45°, preferably at 30°, with regard to the locking unit (18).

3. Distribution box as claimed at least in one of the foregoing claims,
**characterised in that**
the tapping unit (16) presents at least one safety element (36) which is supported in a movable way, and secures the disconnecting slider (34) in the position in which the bus bar terminals (38) are at a distance with regard to the bus bars (40) when the cover (8) is open.

4. Distribution box as claimed in claim 3,
**characterised in that**
the safety element (36) presents a projection (44) on which rests an edge (42) of the disconnecting slider (34).

5. Distribution box as claimed at least in one of the claims 3 and 4,
**characterised in that**
the safety element (36) is spring-loaded.

6. Distribution box as claimed at least in one of the foregoing claims,
**characterised in that**
at least one safety web (46) is provided at the disconnecting slider (34), and engages in a sheet metal retaining element (48) of a holding device (6) in order to secure these latter when the cover is closed (8).

7. Procedure to establish current conduction in a distribution box as claimed at least in one of the foregoing claims with bus bars of an energy distribution system when closing the cover,
**characterised in that**
as an effect of the closure of the cover (8), the engagement fork (50) engages encompassing the stud (53) and subsequently displaces the safety elements (36) in such a way that the disconnecting slider (34) is released, and that the disconnecting slider (34) is displaced after this in such a way that the bus bar terminals (38) are pushed onto the bus bars (40).

8. Procedure as claimed in claim 7,
**characterised in that**
a safety web (46) fixed to the disconnecting slider (34) engages in a sheet metal retaining element (48) in order to secure these when current conduction is being established.

9. Procedure to interrupt current conduction in a distribution box as claimed at least in one of the foregoing claims with bus bars of an energy distribution system during the opening of the cover,
**characterised in that**
as an effect of the opening of the cover (8), the engagement fork (50) is placed against the stud (53) and entrains the disconnecting slider (34) until the bus bar terminals (38) are withdrawn from the bus bars (40), and that the engagement fork (50) is withdrawn from the stud (53) after this.

10. Procedure as claimed in claim 9,
**characterised in that**
the safety elements (36) engage under and secure the disconnecting slider (34) as soon as the disconnecting slider (34) has reached the position in which the bus bar terminals (38) are at a distance of the bus bars (40).

## Revendications

1. Boîte de sortie d'un système de distribution électrique avec un élément de base (10) applicable sur la canalisation (2) du système de distribution électrique, ledit élément de base pouvant être obturé par un couvercle (8) pivotant appliqué sur l'élément de base (10), et à dispositif contacteur-séparateur (20) présentant une unité de prise (16) fixée sur l'élément de base (10) et une unité de verrouillage (18) fixée sur le couvercle (8), l'unité de prise (16) comprenant un coulisseau de séparation (34) mobile dans son logement ainsi que des bornes de barre conductrice (38) et des réceptions de câble, les bornes de barre (38) enserrant les barres conductrices (40) correspondantes lorsque le couvercle (8) est refermé et étant déplacées à l'écart des barres conductrices (40) lorsque le couvercle (8) est ouvert, **caractérisée en ce qu**' une fourchette de saisie (50) est appliquée sur l'unité de verrouillage (18), ladite fourchette de saisie agissant de concours avec un téton (53) formé sur le coulisseau de séparation (34), la fourchette de saisie (50) enserrant alors le téton (53) pour déplacer le coulisseau de séparation (34), et en ce que la fourchette de saisie (50) est logée de manière à pouvoir effectuer un mouvement de rotation dans l'unité de verrouillage (18).

2. Boîte de sortie selon revendication 1,
**caractérisée en ce que** la fourchette de saisie (50) est inclinée par ressort (52) selon un angle compris entre 10° et 45°, préférentiellement 30°, par rapport à l'unité de verrouillage (18).

3. Boîte de sortie selon l'une des revendications précédentes au moins,
**caractérisée en ce que**
l'unité de prise (16) présente au moins un élément de fixation (16) à logement mobile, lequel bloque le coulisseau de séparation (34) dans la position où les bornes de barre (38) sont à l'écart des barres conductrices (40) lorsque le couvercle (8) est ouvert.

4. Boîte de sortie selon revendication 3,
**caractérisée en ce que**
l'élément de fixation (36) présente une partie saillante (44) sur laquelle vient affleurer un bord (42) du coulisseau de séparation (34).

5. Boîte de sortie selon l'une des revendications 3 et 4 au moins,
**caractérisée en ce que**
l'élément de fixation (36) subit la contrainte d'un ressort.

6. Boîte de sortie selon l'une des revendications précédentes au moins,
**caractérisée en ce qu'**
une traverse de fixation (46) au moins est prévue sur le coulisseau de séparation (34), laquelle s'engage dans une tôle de maintien (48) d'une bride de support (6) pour bloquer celle-ci lorsque le couvercle (8) est refermé .

7. Procédé pour réaliser la connexion électrique d'une boîte de sortie selon l'une des revendications précédentes au moins, avec les barres conductrices d'un système de distribution électrique à la fermeture du couvercle,
**caractérisée en ce que**
par fermeture du couvercle (8), le téton (53) se trouve enserré par la fourchette de saisie (50), les éléments de fixation (36) sont ensuite poussés de telle sorte que le coulisseau de séparation (34) est débloqué, et en ce que le coulisseau de séparation (34) se trouve ensuite déplacé de telle sorte que les bornes de barre (38) se trouvent poussés sur les barres conductrices (34).

8. Procédé selon revendication 7
**caractérisée en ce que**
une traverse de fixation (46) appliquée sur le coulisseau de séparation (34) s'engage dans une tôle de maintien (48) pour bloquer celle-ci lors de la réalisation de la connexion électrique.

9. Procédé pour réaliser la déconnexion électrique d'une boîte de sortie selon l'une des revendications précédentes au moins, des barres conductrices d'un système de distribution électrique à l'ouverture du couvercle,
**caractérisée en ce que**
par ouverture du couvercle (8), la fourchette de saisie (50) vient affleurer sur le téton (53) et entraîne le coulisseau de séparation (34), jusqu'à ce que les bornes de barre (38) soient retirées des barres conductrices (40) et que la fourchette de saisie (50) soit consécutivement retirée du téton (53).

10. Procédé selon revendication 9,
**caractérisée en ce que**
les éléments de fixation (36) saisissent le coulisseau de séparation (34) par endessous et le bloquent dès que le coulisseau de séparation (34) a atteint la position où les bornes de barre (38) restent à l'écart des barres conductrices (40).
